# EUROPEAN PATENT APPLICATION

(11) **EP 3 719 627 A1**
(43) Date of publication of application: **07.10.2020**
(21) Application number: 20167214.4
(22) Date of filing: 31.03.2020
(51) Int. Cl.: G06F 3/12, H04N 1/00, G06K 15/02

(54) **IMAGE PROCESSING APPARATUS, IMAGE PROCESSING METHOD, AND CARRIER MEDIUM**

(30) Priority: 02.04.2019 JP 2019070738
(71) Applicant: Ricoh Company, Ltd., Ohta-ku Tokyo 143-8555 (JP)
(72) Inventor: NAKATANI, Yasuhito, Tokyo, 143-8555 (JP)
(74) Representative: SSM Sandmair

(57) **Abstract**

An image processing apparatus includes an acquiring unit (302) configured to acquire a first data format file stored in a server; a converting unit (305) configured to convert the first data format file into a second data format file that is printable with a printing device and has a data amount larger than a data amount of the first data format; a storing unit (306) configured to store the first data format file and the second data format file in the server; a selecting unit (307) configured to select any of the first data format file and the second data format file stored in the server, as a printing target file, in accordance with a communication speed of a network; a reading unit (308) configured to read out the target file from the server; and a transmission unit (309) configured to transmit the target file to the printing device.

## Description

### BACKGROUND

### Technical Field

Aspects of the present invention relate to an image processing apparatus, an image processing method, and a carrier medium.

### Related Art

In JP-2006-319974-A, a technology is disclosed in which a job rendering request is transmitted to an image processing server from an image forming device, and thus, in the image processing server, native format printing data included in an image forming job is converted into a format that can be printed by a printer.

However, in the technology of JP-2006-319974-A, there is a concern that the amount of printing data may increase due to the conversion, and a transmission time at the time of transmitting the printing data to the printer through a network is extended.

### SUMMARY

In order to solve the problems of the technology of the related art described above, an object of the present invention is to restrain the extension of the transmission time at the time of transmitting printing data to a printing device.

In an aspect of the present disclosure, there is provided an image processing apparatus that includes an acquiring unit, a converting unit, a storing unit, a selecting unit, a reading unit, and a transmission unit. The acquiring unit is configured to acquire a first data format file stored in a server. The converting unit is configured to convert the first data format file acquired by the acquiring unit into a second data format file that is printable with a printing device and has a data amount larger than a data amount of the first data format. The storing unit is configured to store the first data format file and the second data format file in the server. The selecting unit is configured to select any of the first data format file and the second data format file that are stored in the server, as a printing target file, in accordance with a communication speed of a network. The reading unit is configured to read out the printing target file selected by the selecting unit from the server. The transmission unit is configured to transmit the printing target file read out by the reading unit to the printing device.

In another aspect of the present disclosure, there is provided an image processing method that include acquiring, converting, storing, selecting, reading out, and transmitting. The acquiring acquires a first data format file stored in a server. The converting converts the first data format file acquired in the acquiring into a second data format file that is printable with a printing device and has a data amount larger than a data amount of the first data format. The storing stores the first data format file and the second data format file in the server. The selecting selects any of the first data format file and the second data format file that are stored in the server, as a printing target file, in accordance with a communication speed of a network. The reading out reads out the printing target file selected by the selecting from the server. The transmitting transmits the printing target file read out by the reading out to the printing device.

In still another aspect of the present disclosure, there is provided a carrier medium carrying computer readable code for controlling a computer to carry out the above-described image processing method.

According to the present invention, it is possible to restrain the extension of the transmission time at the time of transmitting printing data to a printing device.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a system configuration diagram of a printing system according to a first embodiment of the present invention;
FIG. 2 is a hardware configuration diagram of a job processing server according to the first embodiment of the present invention;
FIG. 3 is a diagram illustrating a function configuration of the job processing server according to the first embodiment of the present invention;
FIG. 4 is a diagram illustrating a configuration of a module of a multi function peripheral (MFP) according to the first embodiment of the present invention;
FIG. 5 is a diagram illustrating an example of scan job information that is transmitted from the MFP according to the first embodiment of the present invention;
FIG. 6 is a flowchart illustrating a procedure of the scan job processing of the job processing server according to the first embodiment of the present invention;
FIG. 7 is a flowchart illustrating a procedure of determination processing of a determining unit according to the first embodiment of the present invention;
FIG. 8 is a flowchart illustrating a procedure of printing job processing of the job processing server according to the first embodiment of the present invention;
FIG. 9 is a flowchart illustrating a procedure of selection processing of a selecting unit according to the first embodiment of the present invention;
FIG. 10 is a diagram illustrating an example of printing job information that is transmitted from the MFP according to the first embodiment of the present invention;
FIG. 11 is a flowchart illustrating a procedure of processing at file registration of the job processing server according to the first embodiment of the present invention;
FIG. 12 is a diagram illustrating a function configuration of a job processing server according to a second embodiment of the present invention; and
FIG. 13 is a flowchart illustrating a procedure of printing job processing of the job processing server according to the second embodiment of the present invention.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Hereinafter, one embodiment of the present invention will be described with reference to the drawings.

### First Embodiment

### System Configuration of Printing System

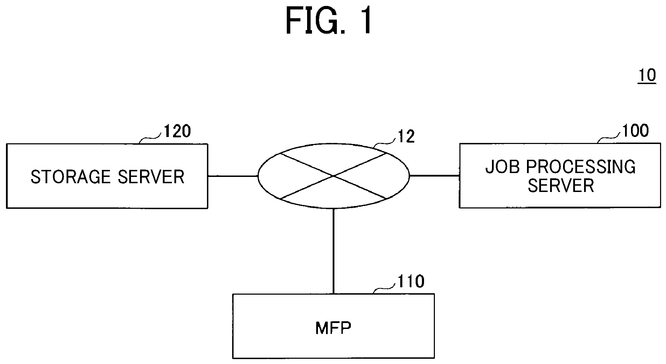

FIG. 1 is a system configuration diagram of a printing system 10 according to a first embodiment of the present invention. As illustrated in FIG. 1, the printing system 10 includes a job processing server 100, an MFP 110, and a storage server 120. Such devices are connected to a network 12, and thus, are capable of communicating with each other through the network 12.

The MFP 110 has a scanning function, a printer function, a facsimile (FAX) function, and the like. The MFP 110 is capable of accumulating a file or the like that is generated by the scanning function in the storage server 120 through the network 12. The MFP 110 is an example of a "printing device".

The MFP 110 is capable of acquiring the file that is accumulated in the storage server 120 through the network 12, and of printing the file by the printer function. At this time, the MFP 110 is capable of allowing the job processing server 100 to perform processing of transmitting a printing target file to the job processing server 100 (an example of an "image processing apparatus") through the network 12 such that a data format of the file is converted into a data format that can be printed by the MFP 110. The MFP 110 is capable of receiving the file after the data format is converted from the job processing server 100 through the network 12, and of printing the file.

### Hardware Configuration of Job Processing Server

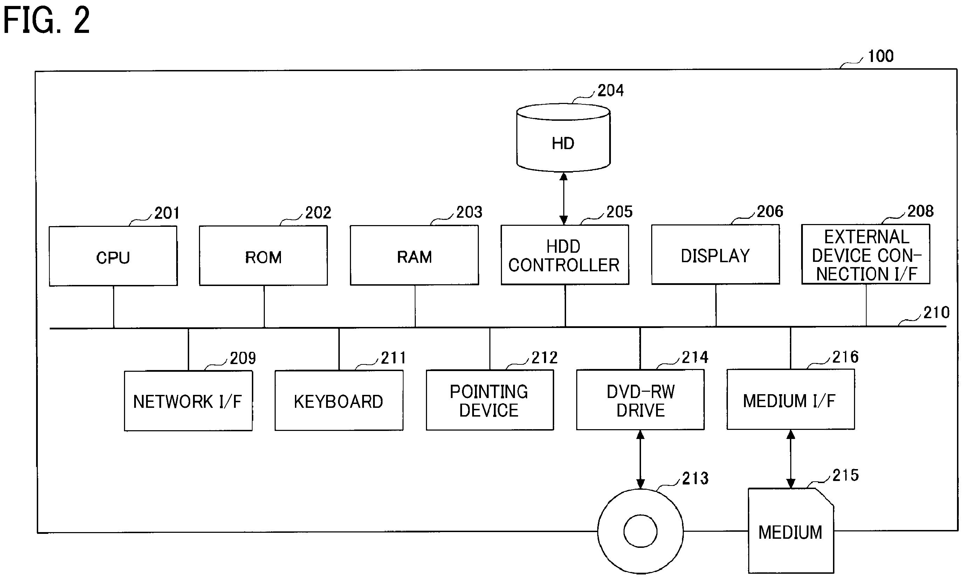

FIG. 2 is a hardware configuration diagram of the job processing server 100 according to the first embodiment of the present invention. As illustrated in FIG. 2, the job processing server 100 includes a central processing unit (CPU) 201, a read only memory (ROM) 202, a random access memory (RAM) 203, a hard disk (HD) 204, a hard disk drive (HDD) controller 205, a display 206, an external device connection interface (I/F) 208, a network I/F 209, a data bus 210, a keyboard 211, a pointing device 212, a digital versatile disc rewritable (DVD-RW) drive 214, and a medium I/F 216.

The CPU 201 controls the entire operation of the job processing server 100. The ROM 202 stores a program that is used for driving the CPU 201. The RAM 203 is used as a work area of the CPU 201. The HD 204 stores various data items such as a program. The HDD controller 205 controls reading or writing of various data items with respect to the HD 204, in accordance with the control of the CPU 201. The display 206 displays various information items such as a cursor, a menu, a window, a character, or an image.

The external device connection I/F 208 is an interface for connecting various external devices. In this case, the external device, for example, is a universal serial bus (USB) memory, a printer, or the like. The network I/F 209 is an interface for performing data communication by using the network 12. A bus line 510 is an address bus, a data bus, or the like for electrically connecting each constituent such as CPU 201 illustrated in FIG. 2.

The keyboard 211 is one type of input unit including a plurality of keys for inputting a character, a numerical value, various instructions, and the like. The pointing device 212 is one type of input unit that selects or executes various instructions, selects a processing target, moves a cursor, and the like. The DVD-RW drive 214 controls reading or writing of various data items with respect to the DVD-RW 213 as an example of detachable recording medium. Note that, an example of detachable recording medium is not limited to the DVD-RW, but may be a digital versatile disc recordable (DVD-R) or the like. The medium I/F 216 controls reading or writing (storing) of a data with respect to the recording medium 215 such as a flash memory.

### Function Configuration of Job Processing Server

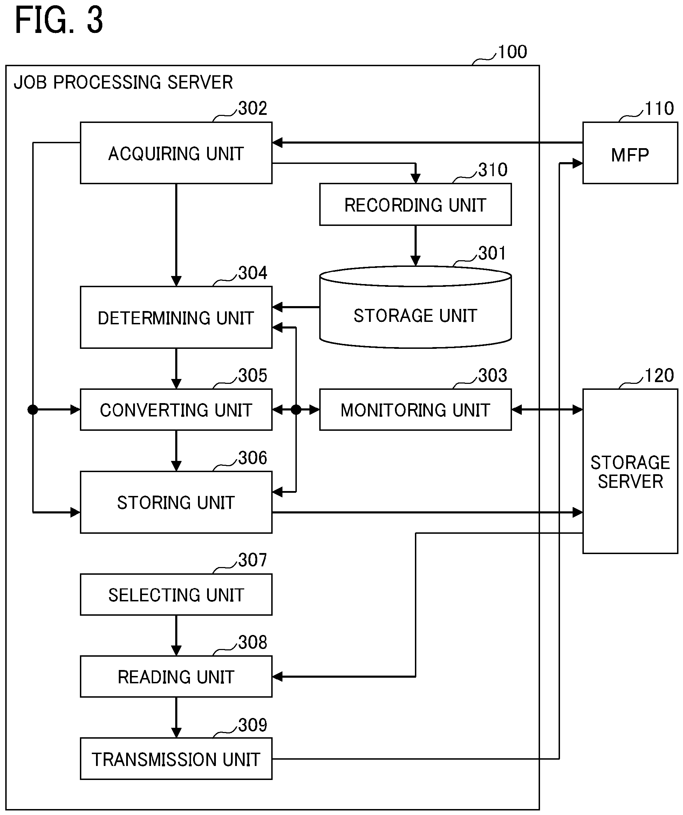

FIG. 3 is a diagram illustrating a function configuration of the job processing server 100 according to the first embodiment of the present invention. As illustrated in FIG. 3, the job processing server 100 includes a storage unit 301, an acquiring unit 302, a monitoring unit 303, a determining unit 304, a converting unit 305, a storing unit 306, a selecting unit 307, a reading unit 308, a transmission unit 309, and a recording unit 310.

The storage unit 301 stores a plurality of printing history information items relevant to a previous printing job of the MFP 110. For example, the printing history information includes a download speed of the printing target file, a data format of the printing target file (a first data format or a second data format), and other necessary information items (for example, printing job information, download date and time, and the like).

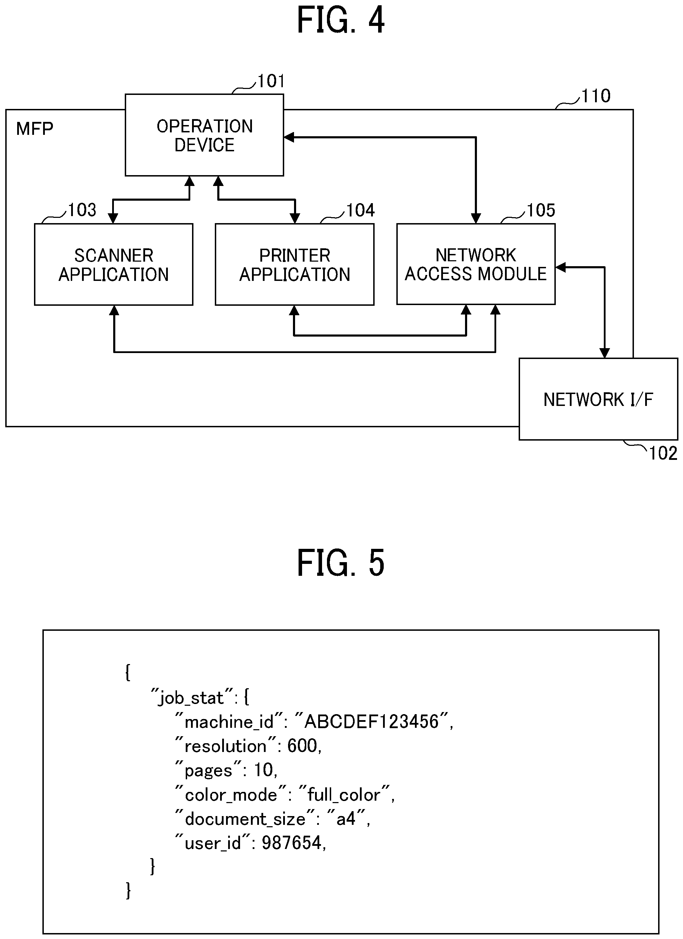

In a case where a scan job occurs in the MFP 110, the acquiring unit 302 acquires a first data format file and scan job information (refer to FIG. 5) from the MFP 110 through the network 12. The first data format file is a file that is generated by a scanner function of the MFP 110 and is stored in the storage server 120. The first data format file represents a document that is read out from a reading medium by the scanner function, and is a native format file such as a portable document format (PDF).

In a case where a printing job occurs in the MFP 110, the acquiring unit 302 acquires the printing job information from the MFP 110 through the network 12.

In a case where the printing target file is downloaded in the MFP 110, the acquiring unit 302 acquires a download time of the printing target file that is measured in the MFP 110 from the MFP 110 through the network 12. The download time is measured by a network access module 105 of the MFP 110 at the time of downloading the printing target file from the job processing server 100.

The monitoring unit 303 monitors the storage server 120, and receives file registration information from the storage server 120 through the network 12 in a case where a file is registered in the storage server 120 from a user terminal. The file registration information indicates at least a data format of the file registered in the storage server 120. The monitoring unit 303 determines whether or not the file registered in the storage server 120 from the user terminal is the first data format file, on the basis of the received file registration information.

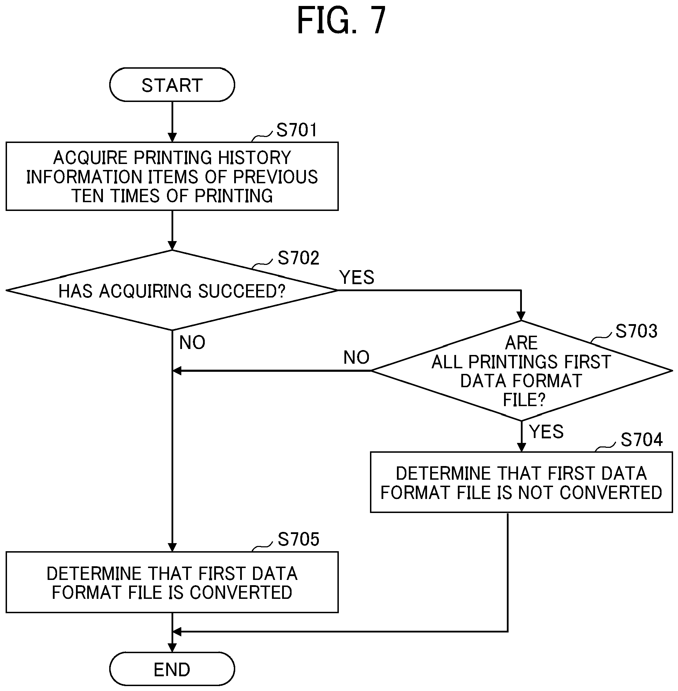

The determining unit 304 determines whether or not the first data format file acquired by the acquiring unit 302 is converted, on the basis of the plurality of printing history information items stored in the storage unit 301. In addition, the determining unit 304 determines whether or not the first data format file registered in the storage server 120 from the user terminal is converted, on the basis of the plurality of printing history information items stored in the storage unit 301. Note that, a specific example of determination processing of the determining unit 304 will be described below by using FIG. 7.

In a case where the determining unit 304 determines that the first data format file is converted, converting unit 305 converts the first data format file into a second data format file. The second data format file is a file that can be printed by the MFP 110 and has a data amount larger than a data amount of the first data format file.

The storing unit 306 stores the first data format file and the second data format file in the storage server 120 through the network 12. Here, in a case where the second data format file is not generated by the converting unit 305, the storing unit 306 stores only the first data format file in the storage server 120.

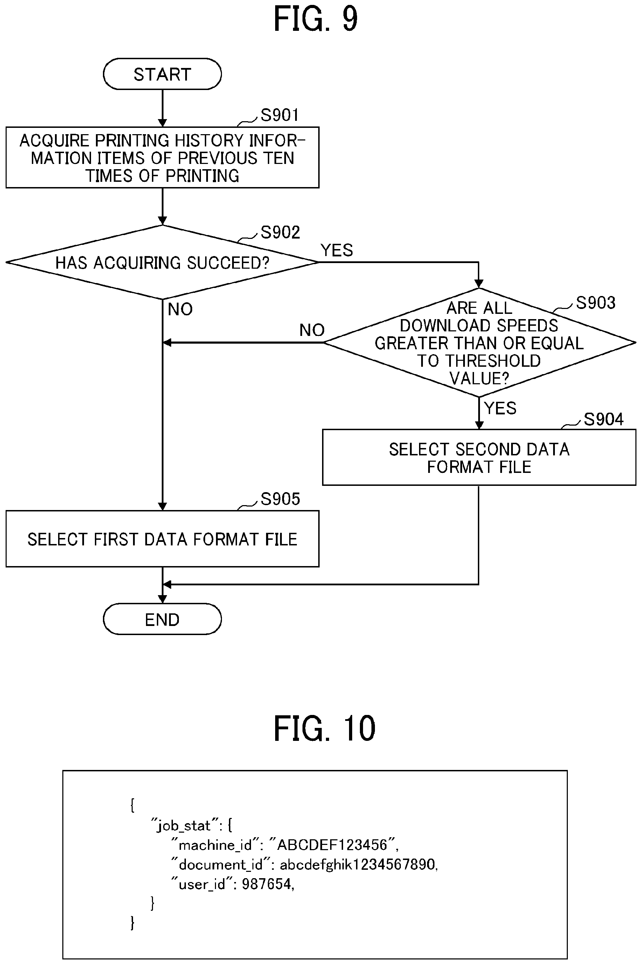

The selecting unit 307 selects any of first data format file and the second data format file as the printing target file of the MFP 110, in accordance with a communication speed of the network 12. Specifically, in a case where all of a plurality of previous download speeds (that is, the communication speed of the network 12) stored in the storage unit 301 is greater than a predetermined threshold value, the selecting unit 307 selects the second data format file as the printing target file. On the other hand, at least one of the plurality of previous download speeds stored in the storage unit 301 is less than the predetermined threshold value, the selecting unit 307 selects the first data format file as the printing target file. Note that, a specific example of selection processing of the selecting unit 307 will be described below by using FIG. 9.

The reading unit 308 reads out the printing target file selected by the selecting unit 307 from the storage server 120. The transmission unit 309 transmits the printing target file read out by the reading unit 308 to the MFP 110.

In a case where the printing target file is printed by the MFP 110, the recording unit 310 calculates the download speed, on the basis of the download time acquired by the acquiring unit 302. The recording unit 310 records printing history information including the calculated download speed in the storage unit 301.

### Configuration of Module of MFP

IG. 4 is a diagram illustrating the configuration of a module of the MFP 110 according to the first embodiment of the present invention. As illustrated in FIG. 4, the MFP 110 includes an operation device 101, a network I/F 102, a scanner application 103, a printer application 104, and the network access module 105.

The scanner application 103 and the printer application 104 are capable of outputting information of job setting or a job execution situation to the operation device 101. The scanner application 103 and the printer application 104 receives user input through the operation device 101, and thus, changes setting or starts job execution. The scanner application 103 or the printer application 104 performs communication with respect to the network access module 105 by process-to-process communication of an implementation tool such as publishing a web application programming interface (Web API).

The network access module 105 is connected to the network 12 through the network I/F 102, and performs communication with respect to the job processing server 100. For example, in a case where a scan job occurs in the scanner application 103, the network access module 105 is capable of transmitting the first data format file and the scan job information that are generated by the scanner application 103 to the job processing server 100 through the network I/F 102 and the network 12. For example, in a case where a printing job occurs in the printer application 104, the network access module 105 is capable of transmitting the printing job information to the job processing server 100 through the network I/F 102 and the network 12. For example, the network access module 105 is capable of receiving the printing target file from the job processing server 100 through the network I/F 102 and the network 12.

A browser can be used as the network access module 105. In this case, the network access module 105 is capable of performing input and output with respect to the operation device 101, instead of the scanner application 103 and the printer application 104. The network access module 105 is capable of transmitting information that is input and output with respect to the operation device 101, and the user input to the scanner application 103 and the printer application 104 by the process-to-process communication.

The network access module 105 is capable of measuring the download time at the time of downloading the printing target file from the job processing server 100, and of transmitting the measured download time to the job processing server 100.

Each function of the job processing server 100 described above can be implemented by one or a plurality of processing circuits. Herein, the "processing circuit" includes a processor that is programmed to execute each function by software, such as a processor that is implemented by an electronic circuit, or a device that is designed to execute each of the functions described above, such as an application specific integrated circuit (ASIC), a digital signal processor (DSP), a field programmable gate array (FPGA), or a circuit module of the related art.

Each of the functions of the job processing server 100 described above, for example, may be implemented by executing a program stored in a storage medium with the processor, in the job processing server 100. The program may be provided in a state of being introduced in advance to the job processing server 100, or may be provided from the outside to be introduced to the job processing server 100. In the latter case, the program may be provided by an external storage medium (for example, a USB memory, a memory card, a compact dick read only memory (CD-ROM), or the like), or may be provided by being downloaded from a server on a network (for example, the Internet or the like).

### Example of Scan Job Information

FIG. 5 is a diagram illustrating an example of the scan job information that is transmitted from the MFP 110 according to the first embodiment of the present invention. In the example illustrated in FIG. 5, the scan job information includes an identification (ID) of the MFP 110 ("machine id"), a scan resolution ("resolution"), the number of pages ("pages"), a color mode ("color_mode"), a document size ("document_size"), and a login user ID ("user_id").

### Procedure of Scan Job Processing of Job Processing Server

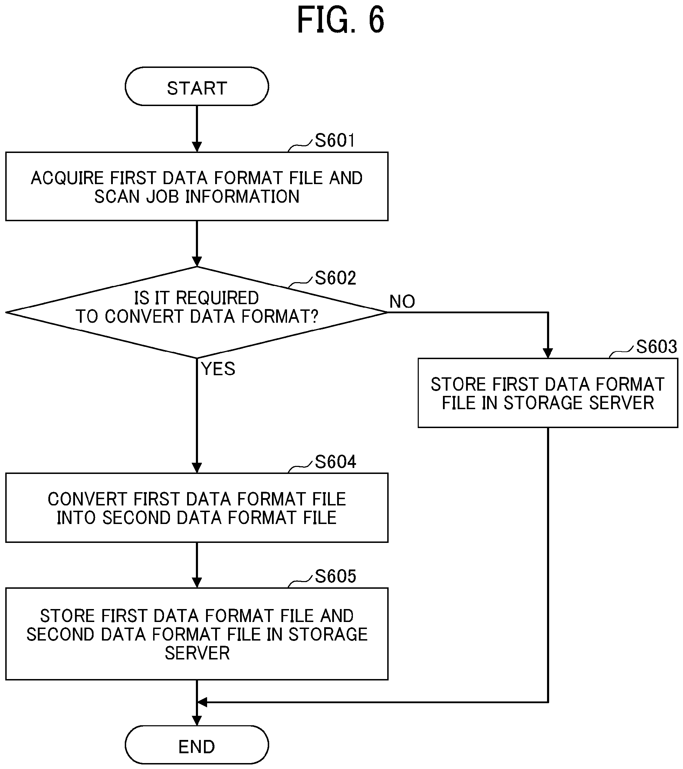

FIG. 6 illustrates a flowchart illustrating a procedure of scan job processing of the job processing server 100 according to first embodiment of the present invention. The scan job processing is processing that is executed by the job processing server 100 in a case where a scan job occurs in the MFP 110.

Note that, in the MFP 110, the scanner application 103 executes scan processing, and thus, reads out the document from the reading medium, and generates the first data format file representing the document, and then, the network access module 105 transmits the first data format file and the scan job information to the job processing server 100.

First, the acquiring unit 302 acquires the first data format file and the scan job information from the MFP 110 through the network 12 (step S601). Next, the determining unit 304 determines whether or not the first data format file acquired in step S601 is converted, on the basis of the plurality of printing history information items stored in the storage unit 301 (step S602).

In step S602, in a case where it is determined that the first data format file is not converted (step S602: NO), the storing unit 306 stores the first data format file in the storage server 120 (step S603). After that, the job processing server 100 ends a set of processing items illustrated in FIG. 6.

On the other hand, in step S602, in a case where it is determined that the first data format file is converted (step S602: YES), the converting unit 305 converts the first data format file into the second data format file (step S604). Then, the storing unit 306 stores the first data format file and the second data format file in the storage server 120 (step S605). After that, the job processing server 100 ends a set of processing items illustrated in FIG. 6.

### Procedure of Determination Processing of Determining Unit

FIG. 7 is a flowchart illustrating a procedure of the determination processing of the determining unit 304 according to the first embodiment of the present invention.

First, the determining unit 304 acquires the printing history information items of the previous ten times of printing from the storage unit 301 (step S701). Here, in the case of succeeding in acquiring the printing history information items of the previous ten times of printing (step S702: YES), the determining unit 304 determines whether or not all of the previous ten times of printing are performed by the first data format file (step S703).

In step S703, in a case where it is determined that "all of the previous ten times of printing are performed by the first data format file" (step S703: YES), the determining unit 304 determines that the "first data format file is not converted" (step S704), and ends a set of processing items illustrated in FIG. 7.

On the other hand, in the case of not succeeding in acquiring the printing history information items of the previous ten times of printing (step S702: NO) or in a case where it is determined that "one or more of the previous ten times of printing is not performed by the first data format file", in step S703 (step S703: NO), the determining unit 304 determines that the "first data format file is converted" (step S705), and ends a set of processing items illustrated in FIG. 7.

### Procedure of Printing Job Processing of Job Processing Server

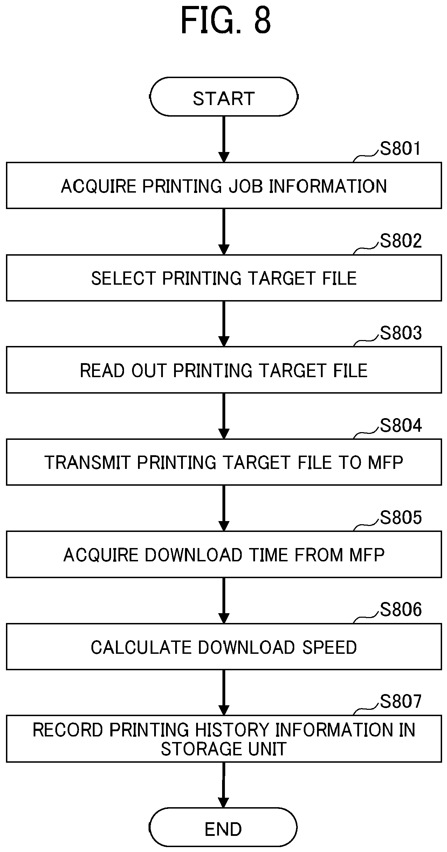

FIG. 8 is a flowchart illustrating a procedure of printing job processing of the job processing server 100 according to the first embodiment of the present invention. The printing job processing is processing that is executed by the job processing server 100 in a case where a printing job occurs in the MFP 110.

Note that, in the MFP 110, the printer application 104 executes printing processing, and thus, generates the printing job information, and then, the network access module 105 transmits the printing job information to the job processing server 100.

First, the acquiring unit 302 acquires the printing job information from the MFP 110 through the network 12 (step S801). Next, the selecting unit 307 selects any of the first data format file and the second data format file, as the printing target file of the MFP 110, in accordance with the communication speed of the network 12, by the selection processing illustrated in FIG. 9 (step S802).

Then, the reading unit 308 reads out the printing target file selected in step S802 from the storage server 120 (step S803). The transmission unit 309 transmits the printing target file read out in step S803 to the MFP 110 (step S804).

Subsequently, the acquiring unit 302 acquires the download time from the MFP 110 through the network 12 (step S805). Then, the recording unit 310 calculates the download speed, on the basis of the download time acquired in step S805 (step S806). For example, the recording unit 310 divides a data amount of the printing target file that is transmitted to the MFP 110 in step S804 by the download time acquired in step S805, and thus, is capable of calculating a transmission data amount per unit time, as the download speed.

The recording unit 310 records the download speed calculated in step S806, the data format of the printing target file that is transmitted to the MFP 110 in step S804 (the first data format or the second data format), and other necessary information items (for example, the printing job information, the download date and time, and the like) in the storage unit 301, as the printing history information (step S807). After that, the job processing server 100 ends a set of processing items illustrated in FIG. 8.

### Procedure of Selection Processing of Selecting Unit

FIG. 9 is a flowchart illustrating a procedure of the selection processing of the selecting unit 307 according to the first embodiment of the present invention.

First, the selecting unit 307 acquires the printing history information items of the last ten times of printing from the storage unit 301 (step S901). Here, in the case of succeeding in acquiring the printing history information items of the last ten times of printing (step S902: YES), the selecting unit 307 determines whether or not all download speeds of each of the printing history information items of the last ten times of printing are greater than or equal to a predetermined threshold value (step S903).

In step S903, in a case where it is determined that "all of the download speeds of each of the printing history information items of the last ten times of printing are greater than or equal to the predetermined threshold value" (step S903: YES), the selecting unit 307 selects the second data format file as the printing target file (step S904), and ends a set of processing items illustrated in FIG. 9.

On the other hand, in the case of not succeeding in acquiring the printing history information items of the last ten times of printing (step S902: NO) or in a case where it is determined that "one or more of the download speeds of each of the printing history information items of the last ten times of printing is less than the predetermined threshold value", in step S903 (step S903: NO), the determining unit 304 selects the first data format file as the printing target file (step S905), and ends a set of processing items illustrated in FIG. 7.

### Example of Printing Job Information

FIG. 10 is a diagram illustrating an example of the printing job information that is transmitted from the MFP 110 according to the first embodiment of the present invention. In the example illustrated in FIG. 10, the printing job information includes the ID of the MFP 110 ("machine_id"), an ID of a printing target document ("document_id"), and the login user ID ("user_id").

As described above, the job processing server 100 according to the first embodiment of the present invention includes the acquiring unit 302 that acquires the first data format file stored in the storage server 120, the converting unit 305 that converts the first data format file acquired by the acquiring unit 302 into the second data format file that can be printed by the MFP 110 and has the data amount larger than the data amount of the first data format, the storing unit 306 that stores the first data format file and the second data format file in the storage server 120, the selecting unit 307 that selects any of the first data format file and the second data format file that are stored in the storage server 120, as the printing target file, in accordance with the communication speed of the network, the reading unit 308 that reads out the printing target file selected by the selecting unit 307 from the storage server 120, and the transmission unit 309 that transmits the printing target file read out by the reading unit 308 to the MFP 110.

Accordingly, in the job processing server 100 according to the first embodiment of the present invention, for example, in a case where the communication speed of the network is comparatively slow, the first data format file having a less data amount is selected as the printing target file, and thus, it is possible to restrain the extension of a transmission time at the time of transmitting the printing target file to the MFP 110. On the other hand, in a case where the communication speed of the network is comparatively fast, the second data format file is selected as the printing target file, and thus, it is possible to reduce the load of data format conversion processing of the MFP 110 while restraining the extension of the transmission time of the printing target file.

In the job processing server 100 according to the first embodiment of the present invention, the acquiring unit 302 is capable of acquiring the first data format file generated by the scanning function of the MFP 110 from the MFP 110.

Accordingly, in the job processing server 100 according to the first embodiment of the present invention, it is possible to generate the first data format file by the MFP 110, and to store in advance the first data format file and the second data format file that is generated by converting the first data format file in the storage server 120.

The job processing server 100 according to the first embodiment of the present invention further includes the monitoring unit 303 that monitors whether or not the first data format file is registered in the storage server 120 from the user terminal, and in a case where the monitoring unit 303 confirms registration of the first data format file in the storage server 120 from the user terminal, the acquiring unit 302 can acquire the first data format file from the storage server 120.

Accordingly, in the job processing server 100 according to the first embodiment of the present invention, when the first data format file is registered in the storage server 120 from the user terminal, the first data format file and the second data format file that is generated by converting the first data format file can be stored in advance in the storage server 120.

In the job processing server 100 according to the first embodiment of the present invention, in a case where the communication speed of the network is less than a predetermined threshold value, the selecting unit 307 can select the first data format file as the printing target file, and in a case where the communication speed of the network is greater than the predetermined threshold value, the selecting unit 307 can select the second data format file as the printing target file.

Accordingly, in the job processing server 100 according to the first embodiment of the present invention, in a case where the communication speed of the network is less than the predetermined threshold value, the first data format file having a less data amount is selected as the printing target file, and thus, it is possible to restrain the extension of the transmission time at the time of transmitting the printing target file to the MFP 110. On the other hand, in a case where the communication speed of the network is greater than the predetermined threshold value, the second data format file is selected as the printing target file, and thus, it is possible to reduce the load of the data format conversion processing of the MFP 110 while restraining the extension of the transmission time of the printing target file.

The job processing server 100 according to the first embodiment of the present invention further includes the determining unit 304 that determines whether or not the conversion of the first data format file is performed, and in a case where the determining unit 304 determines that the conversion of the first data format file is performed, the converting unit 305 can convert the first data format file into the second data format file.

Accordingly, in the job processing server 100 according to the first embodiment of the present invention, it is possible to store in advance the first data format file and the second data format file in the storage server 120 only in a case where it is required to convert the first data format file, and thus, it is possible to effectively use a storage area of the storage server 120.

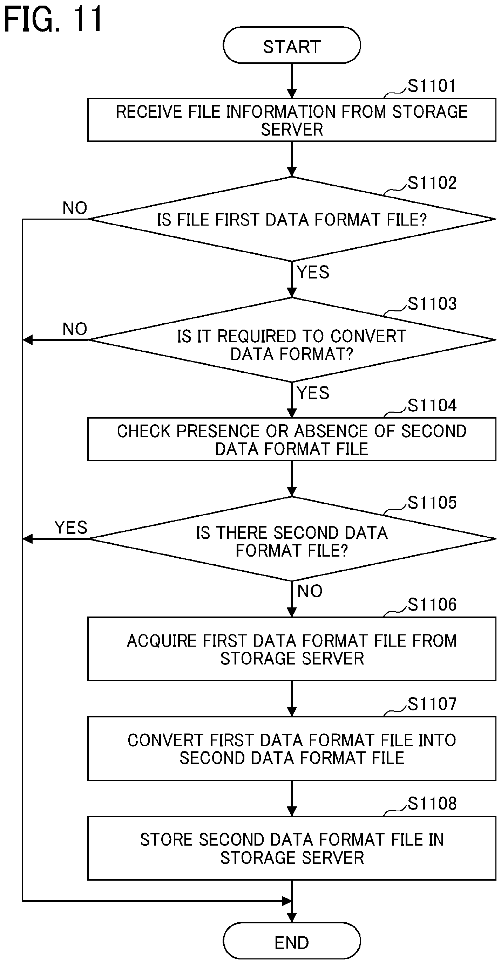

Procedure of Processing at File Registration of Job Processing Server FIG. 11 is a flowchart illustrating a procedure of processing at file registration of the job processing server 100 according to the first embodiment of the present invention. The processing at file registration is processing that is executed by the job processing server 100 in a case where the file is registered in the storage server 120 from the user terminal. Note that, in a case where the file is registered from the user terminal, the storage server 120 transmits the file registration information to the job processing server 100.

First, the monitoring unit 303 receives the file registration information from the storage server 120 through the network 12 (step S1101). Next, the monitoring unit 303 determines whether or not the file registered in the storage server 120 from the user terminal is the first data format file, on the basis of the file registration information received in step S1101 (step S1102).

In step S1102, in a case where it is determined that the file is not the first data format file (step S1102: NO), the job processing server 100 ends a set of processing items illustrated in FIG. 11.

On the other hand, in step S1102, in a case where it is determined that the file is the first data format file (step S1102: YES), the determining unit 304 determines whether or not the first data format file registered in the storage server 120 from the user terminal is converted, on the basis of the plurality of printing history information items stored in the storage unit 301, by the determination processing illustrated in FIG. 7 (step S1103).

In step S1103, in a case where it is determined that the first data format file is not converted (step S1103: NO), the job processing server 100 ends a set of processing items illustrated in FIG. 11.

On the other hand, in step S1103, in a case where it is determined that the first data format file is converted (step S1103: NO), the monitoring unit 303 inquires the storage server 120 of whether or not the second data format file corresponding to the first data format file is stored in advance in the storage server 120 (step S1104).

As a result, in the case of obtaining a response that the second data format file is stored in advance in the storage server 120 (step S1105: YES), the job processing server 100 ends a set of processing items illustrated in FIG. 11.

On the other hand, in the case of obtaining a response that the second data format file is not stored in advance in the storage server 120 (step S1105: NO), the monitoring unit 303 acquires the first data format file from the storage server 120 (step S1106). Then, the converting unit 305 converts the first data format file into the second data format file (step S1107). The storing unit 306 stores the second data format file in the storage server 120 (step S 1108). After that, the job processing server 100 ends a set of processing items illustrated in FIG. 11.

### Second Embodiment

### Function Configuration of Job Processing Server

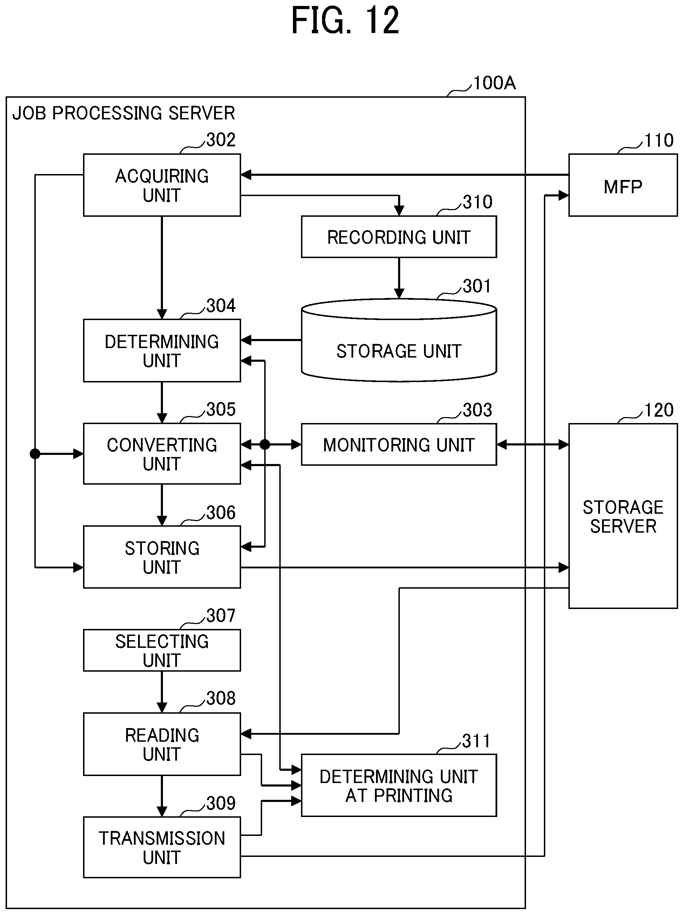

FIG. 12 is a diagram illustrating a function configuration of a job processing server 100A according to a second embodiment of the present invention. As illustrated in FIG. 12, the job processing server 100A of the second embodiment is different from the job processing server 100 of the first embodiment illustrated in FIG. 3, in that the job processing server 100A further includes a determining unit 311 at printing. The others are identical to the configuration of the job processing server 100 of the first embodiment illustrated in FIG. 3.

In printing job processing of the job processing server 100A, in a case where the reading unit 308 fails in reading out the second data format file, the determining unit 311 at printing allows the converting unit 305 to convert the first data format file into the second data format file, and allows the transmission unit 309 to transmit the second data format file.

### Procedure of Printing Job Processing of Job Processing Server

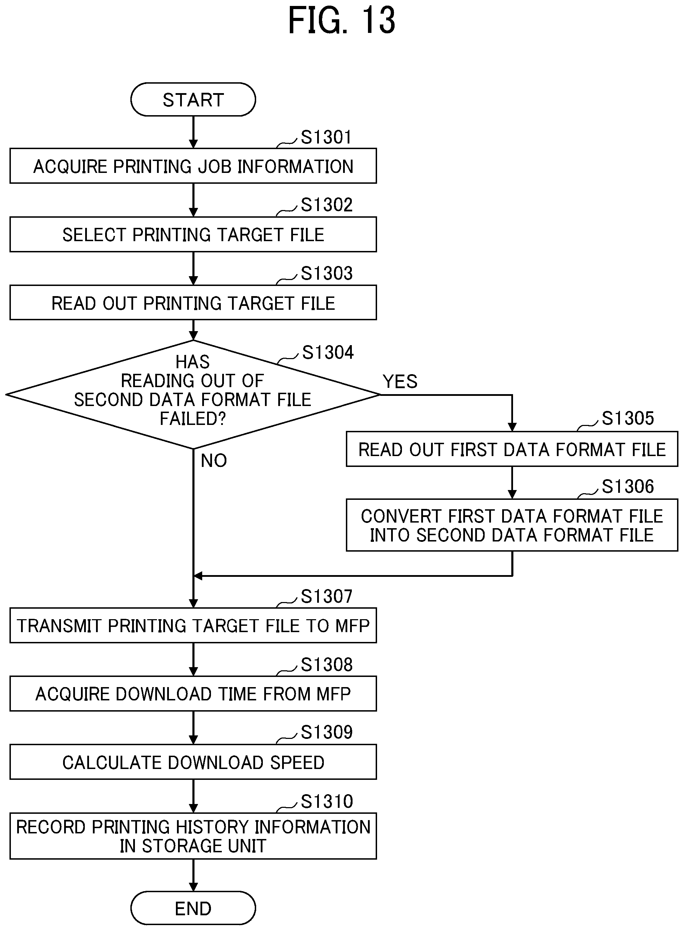

FIG. 13 is a flowchart illustrating a procedure of the printing job processing of the job processing server 100A according to the second embodiment of the present invention.

First, the acquiring unit 302 acquires the printing job information from the MFP 110 through the network 12 (step S1301). Next, the selecting unit 307 selects any of the first data format file and the second data format file, as the printing target file of the MFP 110, in accordance with the communication speed of the network 12, by the selection processing illustrated in FIG. 9 (step S1302).

Then, the reading unit 308 reads out the printing target file selected in step S1302 from the storage server 120 (step S1303).

Here, in a case where the printing target file is the second data format file, and the reading unit 308 fails in reading out the second data format file (step S1304: YES), the reading unit 308 reads out the first data format file from the storage server 120 (step S1305). Then, the converting unit 305 converts the first data format file into the second data format file (step S1306). After that, the job processing server 100A allows the processing to proceed to step S1307.

On the other hand, in a case where the reading unit 308 fails in reading out the second data format file (step S1304: NO), the job processing server 100A allows the processing to proceed to step S1307.

In step S1307, the transmission unit 309 transmits the printing target file read out in step S1303 (the first data format file or the second data format file) or the printing target file generated in step S1306 (the second data format file) to the MFP 110.

Subsequently, the acquiring unit 302 acquires the download time from the MFP 110 through the network 12 (step S1308). Then, the recording unit 310 calculates the download speed, on the basis of the download time acquired in step S1308 (step S1309).

The recording unit 310 records the download speed calculated in step S1309, the data format of the printing target file transmitted to the MFP 110 in step S1307 (the first data format or the second data format), and other necessary information items (for example, the printing job information, the download date and time, and the like) in the storage unit 301, as the printing history information (step S1310). After that, the job processing server 100A ends a set of processing items illustrated in FIG. 13.

As described above, in the job processing server 100A according to the second embodiment of the present invention, in a case where the second data format file is selected by the selecting unit 307 but the reading unit 308 fails to read out the second data format file from the storage server 120, the reading unit 308 reads out the first data format file from the storage server 120, the converting unit 305 converts the first data format file read out by the reading unit 308 into the second data format file, and the transmission unit 309 transmits the second data format file generated by the converting unit 305 to the MFP 110.

Accordingly, in the job processing server 100A according to the second embodiment of the present invention, even in a case where the second data format file does not exist in the storage server 120 due to a factor such as deletion by a user, it is possible to reduce the load of the data format conversion processing of the MFP 110 while restraining the extension of the transmission time of the printing target file, by converting the first data format file into the second data format file to be transmitted to the MFP 110, in the case of expecting a time shortening effect until printing is completed.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. An image processing apparatus comprising:
an acquiring unit (302) configured to acquire a first data format file stored in a server;
a converting unit (305) configured to convert the first data format file acquired by the acquiring unit (302) into a second data format file that is printable with a printing device and has a data amount larger than a data amount of the first data format;
a storing unit (306) configured to store the first data format file and the second data format file in the server;
a selecting unit (307) configured to select any of the first data format file and the second data format file that are stored in the server, as a printing target file, in accordance with a communication speed of a network;
a reading unit (308) configured to read out the printing target file selected by the selecting unit (307) from the server; and
a transmission unit (309) configured to transmit the printing target file read out by the reading unit (308) to the printing device.

2. The image processing apparatus according to claim 1,
wherein the acquiring unit (302) acquires, from the printing device, the first data format file that is generated by a scanning function of the printing device.

3. The image processing apparatus according to claim 1, further comprising a monitoring unit (303) configured to monitor whether the first data format file is registered in the server from a user terminal,
wherein in a case where the monitoring unit (303) confirms registration of the first data format file in the server from the user terminal, the acquiring unit (302) acquires the first data format file from the server.

4. The image processing apparatus according to any one of claims 1 to 3,
wherein in a case where the communication speed of the network is less than a threshold value, the selecting unit (307) selects the first data format file as the printing target file, and
in a case where the communication speed of the network is greater than the threshold value, the selecting unit (307) selects the second data format file as the printing target file.

5. The image processing apparatus according to any one of claims 1 to 4, further comprising a determining unit (304) configured to determine whether conversion of the first data format file is to be performed,
wherein in a case where the determining unit (304) determines that the conversion of the first data format file is to be performed, the converting unit (305) converts the first data format file into the second data format file.

6. The image processing apparatus according to any one of claims 1 to 5,
wherein in a case where the selecting unit (307) selects the second data format file and the reading unit (308) fails to read out the second data format file from the server,
the reading unit (308) reads out the first data format file from the server,
the converting unit (305) converts the first data format file read out by the reading unit (308) into the second data format file, and
the transmission unit (309) transmits the second data format file generated by the converting unit (305) to the printing device.

7. An image processing method comprising:
acquiring (S601) a first data format file stored in a server;
converting (S604) the first data format file acquired in the acquiring (S601) into a second data format file that is printable with a printing device and has a data amount larger than a data amount of the first data format;
storing (S605) the first data format file and the second data format file in the server;
selecting (S802) any of the first data format file and the second data format file that are stored in the server, as a printing target file, in accordance with a communication speed of a network;
reading out (S803) the printing target file selected by the selecting (S802) from the server; and
transmitting (S804) the printing target file read out by the reading out (S803) to the printing device.

8. A carrier medium carrying computer readable code for controlling a computer to carry out the image processing method according to claim 7.
